# EUROPÄISCHE PATENTSCHRIFT

(11) **EP 2 229 541 B1**
(45) Veröffentlichungstag und Bekanntmachung des Hinweises auf die Patenterteilung: **28.08.2013**
(21) Anmeldenummer: 09707937.0
(22) Anmeldetag: 05.02.2009
(51) Int. Cl.: F16D 3/79

(54) **DREHMOMENTÜBERTRAGUNGSVORRICHTUNG EINES KRAFTFAHRZEUGS**
TORQUE TRANSFER DEVICE OF A MOTOR VEHICLE
DISPOSITIF DE TRANSMISSION DE COUPLE DANS UN VÉHICULE À MOTEUR

(30) Priorität: 09.02.2008 DE 102008008412
(43) Veröffentlichungstag der Anmeldung: 22.09.2010
(73) Patentinhaber: ZF Friedrichshafen AG, 88038 Friedrichshafen (DE)
(72) Erfinder: BAUER, Thomas, 97633 Grossbardorf (DE); BREMER, Martin, 97422 Schweinfurt (DE)
(86) Internationale Anmeldenummer: PCT/EP2009/051317
(87) Internationale Veröffentlichungsnummer: WO 2009/098255

(56) Entgegenhaltungen:
- DE-A1- 3 827 249
- DE-A1- 10 127 653
- DE-C1- 3 222 119
- FR-A- 2 878 302
- US-A- 5 221 232

## Beschreibung

Die Erfindung betrifft eine Drehmomentübertragungsvorrichtung eines Kraftfahrzeugs, mit den Merkmalen des Oberbegriffes von Anspruch 1.

Eine Drehmomentübertragungsvorrichtung dieser Art ist aus der FR 2 878 302 A1 bekannt. Ein axial elastisches Übertragungsteil ist vorgesehen, um das von einem Verbrennungsmotor erzeugte Drehmoment auf einen Drehmomentwandler zu übertragen, und ist hierzu mittels Befestigungselementen sowohl mit einer Kurbelwelle des Verbrennungsmotors als auch mit dem Drehmomentwandler verbunden. Das Übertragungsteil weist eine im wesentlichen sternförmige Ausbildung aus, wobei in Umfangsrichtung vier Radialansätze vorgesehen sind, die zur Verbindung mit dem Drehmomentwandler dienen. In Umfangsrichtung jeweils zwischen je zweien dieser Radialansätze sind Radialaufnahmen vorgesehen, die zur Befestigung einer Schwungmasse dienen. Um sowohl die Radialansätze als auch die Radialaufnahmen jeweils axial elastisch auszubilden, sind Ausnehmungen vorgesehen, von denen sich jede zwischen jeweils einem Radialansatz und jeweils einer Radialaufnahme erstreckt, und hierbei einen Einschnitt bildet, der sich vom radial außen liegenden Rand des Übertragungsteils in einen radial weiter innen liegenden Rand erstreckt.

Das bekannte Übertragungselement ist im radial inneren Bereich, in welchem die Anbindung an die Kurbelwelle des Verbrennungsmotors erfolgt, ringförmig ausgebildet, und lässt dort jegliche Elastizität vermissen. Dadurch entsteht dort bei Übertragung von Drehmoment eine Belastung der Befestigungselemente, durch welche das Übertragungsteil am Verbrennungsmotor festgelegt ist. Diese Belastung ist bedingt durch die in diesem Bereich des Übertragungsteils vorhandene Ringform, die zu einer formstabilen Ausgestaltung führt, und nicht befähigt ist, Relativbewegungen des Drehmomentwandlers gegenüber der Kurbelwelle des Verbrennungsmotors zumindest teilweise auszugleichen. Besonders störend ist in diesem Zusammenhang das Blähen des Wandlers infolge statischer und dynamischer (fliehkraftbedingter) Öldrücke und damit dessen Aufweitung auch in Axialrichtung. Ferner sind als Lasten neben dem zu übertragenden Drehmoment auch diejenigen zu nennen, die aus Axiallasten, einem Achsversatz und aus Kurbelwellendurchbiegungen resultieren. Aufgrund dessen können die Verbindungselemente gelockert und in der Folge auch zerstört werden.

Eine weitere Drehmomentübertragungsvorrichtung dieser Art ist aus der DE 10 2005 050 506 A1 bekannt. Hier wird ein aus Federblech bestehendes Übertragungsteil (bezeichnet als tellerfederartiges Zwischenelement) eingesetzt, um das Drehmoment von einem Verbrennungsmotor auf einen Drehmomentwandler zu übertragen. Das Übertragungsteil ist dabei sowohl an einem Flansch des Verbrennungsmotors als auch an einem Deckel des Drehmomentwandlers mittels Schrauben befestigt. Häufig kommen bei einer solchen Vorrichtung für die Befestigung auch Nieten zum Einsatz. Bei der genannten Lösung weist das Übertragungsteil eine weitgehend ungestörte Ringform auf.

Durch die zu übertragenden Lasten erfolgt eine Belastung der Schraub- oder Nietverbindung, mit der das Übertragungsteil am Motor bzw. am Wandler festgelegt ist. Durch die im wesentlichen ungestörte Ringform des Übertragungsteils ergibt sich eine relativ formstabile Ausgestaltung des Anbindungsblechs, so dass Relativbewegungen zwischen dem Übertragungsteil und dem Wandler zu einer starken Belastung der Niet- oder Schraubverbindung führen, mit der das Übertragungsteil am Deckel des Drehmomentwandlers festgelegt ist. Besonders störend ist hierbei das zuvor bereits erläuterte Blähen des Wandlers sowie Axiallasten, resultierend aus einem Achsversatz und aus Kurbelwellendurchbiegungen.

Der Erfindung liegt daher die **Aufgabe** zugrunde, eine Drehmomentübertragungsvorrichtung und namentlich deren ring- oder scheibenförmiges Übertragungsteil so auszubilden, dass die oben genannten Belastungen der Befestigungselemente, insbesondere der Niete, vor allem durch die Blähung des Wandlers einen geringeren schädigenden Einfluss auf die Befestigungselemente haben. Es soll also erreicht werden, dass auch insbesondere bei einem Blähen des Wandlers sowie bei hohen zu übertragenden Lasten eine geringere Belastung der Niete stattfindet.

Diese Aufgabe wird gelöst mit den Kennzeichnenden Merkmalen von Anspruch 1. Bei diesen Ausnehmungen handelt es sich um solche, die zusätzlich zu den Bohrungen für den Durchtritt der Befestigungselemente in das Übertragungsteil eingebracht sind.

Die Ausnehmungen sind als Einschnitte ausgebildet, die sich vom radial innenliegenden Rand des Übertragungsteils zwischen zwei Befestigungselementen in den ersten bzw. zweiten Radienbereich erstrecken. Die Einschnitte können sich dabei mindestens bis zum Radius der Befestigungselemente erstrecken. Die Einschnitte können ferner so ausgebildet sein, dass um die Bohrungen im Übertragungsteil ein ringförmiger Materialbereich verbleibt. Der ringförmige Materialbereich kann sich dabei um einen Umfangswinkel von mindestens 180° erstrecken. Die Anzahl der Einschnitte entspricht dabei der Anzahl der Befestigungselemente.

Die Befestigungselemente sind vorzugsweise Nieten, die sich durch Bohrungen im Übertragungsteil erstrecken.

Der erste und/oder der zweite Radienbereich erstrecken sich radial vorzugsweise zwischen 100% und 400% des Durchmessers der Bohrungen im Übertragungsteil, die für den Durchtritt der Befestigungselemente vorhanden sind.

Bevorzugt ist eine Anzahl Befestigungselemente äquidistant um den Umfang des Übertragungsteils angeordnet.

Gemäß dem erfindungsgemäßen Vorschlag wird also das ring- oder scheibenförmige Übertragungsteil (Anbindungsblech) durch eine spezielle Ausformung im Bereich der Vernietung elastisch gestaltet. Hierdurch können sich die zur Aufnahme jeweils eines Nietes vorgesehenen Anbindungsbereiche des jeweiligen Anbindungsbleches unter Belastung, wie beispielsweise aufgrund des Blähens des Wandlers, ausrichten, so dass der Nietbereich selber deutlich entlastet ist.

Die vorgeschlagene geometrische Ausbildung des Übertragungsteils insbesondere im Bereich der Verbindungselemente reduziert die Belastung der Verbindungselemente im Betrieb. Die verformungsbedingten Kräfte werden bereits im Übertragungsteil selber abgebaut, bevor diese die Verbindungselemente erreichen können. Dies erfolgt durch eine gezielte Erhöhung der Elastizität im Übertragungsteil.

Bei der geometrischen Ausgestaltung der Anbindungsbereiche des Anbindungsbleches ist darauf zu achten, dass ein vernünftiger Kompromiss zwischen der verbesserten Elastizität des Anbindungsbereiches und dessen Befähigung zur Übertragung eines Drehmoments sowie der anderen oben genannten Lasten gefunden wird, da ansonsten die einzelnen Anbindungsbereiche bei der Beaufschlagung mit einem Drehmoment bzw. mit den anderen genannten Lasten einem Schädigungsrisiko unterworfen sein können.

Die vorgeschlagene Lösung kann bei Bauarten von Drehmomentübertragungsvorrichtungen eingesetzt werden, bei welchen die Ausgestaltung des Anbindungsblechs derart ist, dass die Anbindung desselben an eine sog. Flexplatte im radial äußeren Bereich erfolgt. Demzufolge ist die Vernietung radial innerhalb dieser Anbindung vorgesehen.

Es wird somit eine haltbare Verbindung zwischen dem Übertragungsteil (Anbindungsblech) und dem Wandler insbesondere beim Einsatz einer Nietverbindung geschaffen, wobei eine Reduzierung der auftretenden Spannungen in der Nietverbindung durch die geometrische Ausgestaltung des Übertragungsteils insbesondere im Bereich der Nietverbindung erreicht wird.

In der Zeichnung sind Ausführungsbeispiele der Erfindung dargestellt. Es zeigen:
- Fig. 1: in der Seitenansicht einen Teil eines Antriebsstranges eines Kraftfahrzeugs, teilweise im Schnitt gezeigt, mit einem scheiben- oder ringförmigen Übertragungsteil (Anbindungsblech), das an einem Drehmomentwandler befestigt ist,
- Fig. 2: das scheiben- oder ringförmige Übertragungsteil in der Vorderansicht (in Achsrichtung gesehen) gemäß einer ersten Ausführungsform der Erfindung,
- Fig. 3: das scheiben- oder ringförmige Übertragungsteil in der Darstellung gemäß Fig. 2 gemäß einer zweiten Ausführungsform der Erfindung.

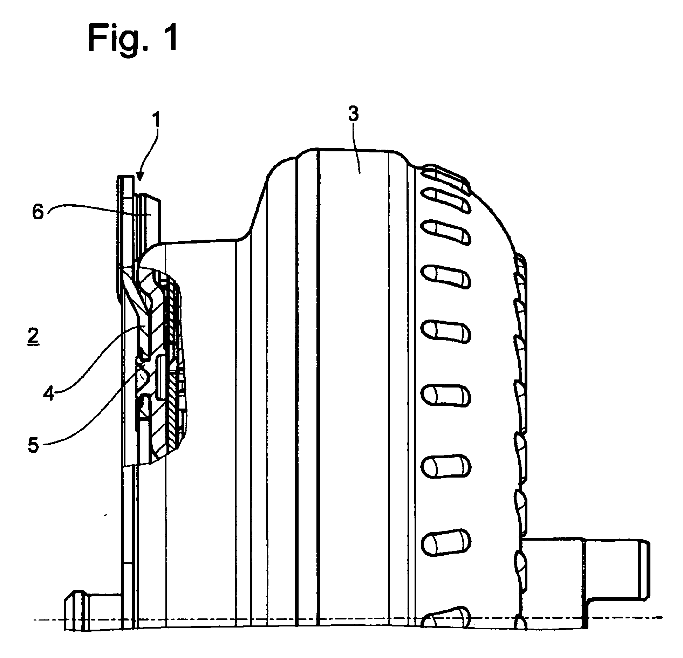

In Fig. 1 ist ein Ausschnitt des Antriebsstranges eines Kraftfahrzeugs zu sehen. Nicht näher dargestellt ist (links) ein Verbrennungsmotor 2, der mittels einer Drehmomentübertragungsvorrichtung 1 mit einem Drehmomentwandler 3 so verbunden ist, dass ein Drehmoment vom Verbrennungsmotor 1 auf den Wandler 3 übertragen werden kann. Die Drehmomentübertragungsvorrichtung 1 besteht im wesentlichen aus einem scheiben- oder ringförmigen Übertragungsteil 4, das auch als Anbindungsblech bezeichnet wird.

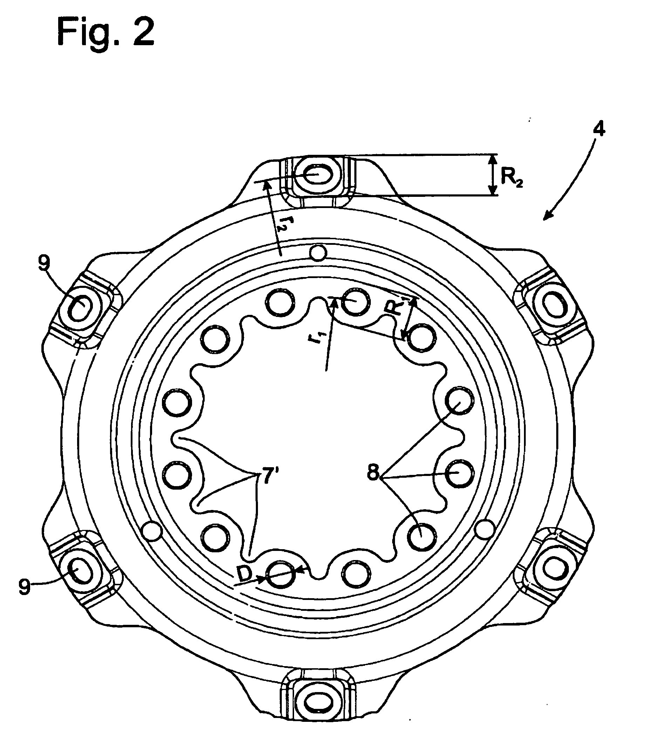

Wie aus der Zusammenschau mit Fig. 2 ersichtlich wird, ist das Übertragungsteil 4 mittels Befestigungselementen 5 und 6 am Wandler 3 bzw. am Verbrennungsmotor 1 festgelegt. Vorliegend handelt es sich hierbei bei den Befestigungselementen 5 um Niete und bei den Befestigungselementen 6 um Schrauben, die durch Bohrungen 8 bzw. 9 im Übertragungsteil 4 hindurchreichen und dieses am Verbrennungsmotor 1 bzw. am Wandler 3 festlegen. Wie zu sehen ist, befinden sich die Bohrungen 8 für die Niete 5 auf einem ersten Radius r₁, während die Bohrungen 9 für die Schraube 6 auf einem zweiten Radius r₂ liegen.

Die Radien r₁ und r₂ müssen nicht zwingend unterschiedlich sein.

Die Bohrungen 8 bzw. 9 haben einen Durchmesser D, von dem ausgehend ein Radienbereich definiert werden kann, der in den Figuren mit R₁ bzw. R₂ bezeichnet ist, d. h. eine gewisse ringförmige Fläche, die sich in radiale Richtung über die Bereiche R₁ bzw. R₂ erstrecken. In mindestens einer dieser Radienbereiche R₁ bzw. R₂ liegen die nachfolgend beschriebenen speziellen geometrischen Ausgestaltungen (Ausnehmungen) des Übertragungsteils 4. Dabei ist bevorzugt vorgesehen, dass sich die Radienbereiche R₁ bzw. R₂ über ca. 100% bis 400% des Durchmessers D der Bohrungen 8, 9 erstrecken.

Wie es bereits deutlich aus Fig. 2 hervorgeht, ist vorgesehen, dass das Übertragungsteil 4 im ersten Radienbereich R₁ (und/oder im zweiten Radienbereich R₂) mit Ausnehmungen 7 versehen ist. Diese Ausnehmungen 7 erstrecken sich zumindest über einen Teil des Radienbereichs R₁ (R₂) und haben zur Folge, dass die axiale Steifigkeit des Übertragungsteils 4 geschwächt ist. Hierdurch wird erreicht, dass bei Verformungen beispielsweise des Wandlergehäuses diese nicht unmittelbar an die Niete bzw. Schrauben 5, 6 weitergegeben, sondern bereits im Übertragungsteil 4 selber ausgeglichen werden. Damit werden die Niete bzw. Schrauben weniger stark belastet, so dass ihre Haltbarkeit erhöht wird.

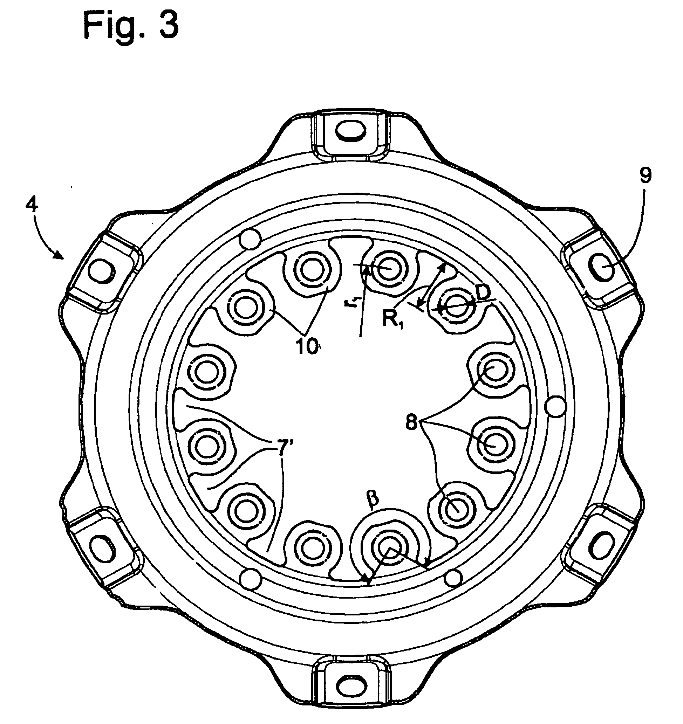

In den Figuren 2 und 3 sind Möglichkeiten der Ausgestaltung der Ausnehmungen 7 zu sehen.

In Fig. 2 reichen die Ausnehmungen 7' jeweils zwischen zwei Nieten 5 bzw. Bohrungen 8 vom radial inneren Rand des Übertragungsteils 4 etwa bis zum Radius r₁

Bei der Lösung gemäß Fig. 3 sind die Ausnehmungen 7' indes stärker ausgeprägt. Sie reichen radial weiter und separieren fast die einzelnen Abschnitte mit den Bohrungen 8, so dass nur noch ein ringförmiger Materialbereich 10 stehen bleibt, der sich - wie in Fig. 3 eingetragen ist - um einen Umfangswinkel β von etwa 270° erstreckt.

### Bezugszeichenliste

- 1: Drehmomentübertragungsvorrichtung
- 2: Verbrennungsmotor
- 3: Drehmomentwandler
- 4: scheiben- oder ringförmiges Übertragungsteil
- 5: Befestigungselement (Niet)
- 6: Befestigungselement (Schraube)
- 7: Ausnehmung
- 7': Ausnehmung
- 8: Bohrung
- 9: Bohrung
- 10: ringförmiger Materialbereich

- R₁: erster Radienbereich
- R₂: zweiter Radienbereich
- r₁: erster Radius
- r₂: zweiter Radius
- D: Durchmesser der Bohrung
- β: Umfangswinkel

## Patentansprüche

1. Drehmomentübertragungsvorrichtung (1) eines Kraftfahrzeugs, die ein Drehmoment von einem Verbrennungsmotor (2) auf einen Drehmomentwandler (3) übertragen kann wobei die Drehmomentübertragungsvorrichtung (1) ein scheiben oder ringförmiges Übertragungsteil (4) umfasst, das in einem ersten Radienbereich (R₁) mit einer Anzahl auf einem ersten Radius (r₁) liegenden Befestigungselementen (5) mit dem Drehmomentwandler (3) verbindbar ist und das in einem zweiten Radienbereich (R₂) mit einer Anzahl auf einem zweiten Radius (r₂) liegenden Befestigungselementen (6) mit dem Verbrennungsmotor (2) verbindbar ist, wobei das Übertragungsteil (4) im ersten Radienbereich (R₁) mit Ausnehmungen (7) versehen ist, die als Einschnitte (7') ausgebildet sind, und sich zumindest teilweise über den ersten Radienbereich (R₁) erstrecken, und die die axiale Steifigkeit des Übertragungsteils (4) schwächen,
**dadurch gekennzeichnet,**
**dass** die Ausnehmungen (7) sich vom radial innenliegenden Rand des Übertragungsteils (4) zwischen zwei Befestigungselementen (5) in den ersten Radienbereich (R₁) erstrecken, und die Anzahl der Einschnitte (7') der Anzahl der Befestigungselemente (5) entspricht.

2. Drehmomentübertragungsvorrichtung nach Anspruch 1,
**dadurch gekennzeichnet, dass** die Befestigungselemente (5) Nieten sind, die sich durch Bohrungen (8) im Übertragungsteil (4) erstrecken.

3. Drehmomentübertragungsvorrichtung nach Anspruch 2,
**dadurch gekennzeichnet, dass** sich der erste Radienbereich (R₁) zwischen 100% und 400% des Durchmessers (D) der Bohrungen (8) im Übertragungsteil (4) erstreckt.

4. Drehmomentübertragungsvorrichtung nach einem der Ansprüche 1 bis 3, **dadurch gekennzeichnet, dass** eine Anzahl Befestigungselemente (5) äquidistant um den Umfang des Übertragungsteils (4) angeordnet ist.

5. Drehmomentübertragungsvorrichtung nach Anspruch 1,
**dadurch gekennzeichnet, dass** sich die Einschnitte (7') mindestens bis zum Radius (r₁) der Befestigungselemente (5) erstrecken.

6. Drehmomentübertragungsvorrichtung nach Anspruch 5,
**dadurch gekennzeichnet, dass** die Einschnitte (7') so ausgebildet sind, dass um die Bohrungen (8) im Übertragungsteil (4) ein ringförmiger Materialbereich (10) verbleibt.

7. Drehmomentübertragungsvorrichtung nach Anspruch 6,
**dadurch gekennzeichnet, dass** sich der ringförmige Materialbereich (10) um einen Umfangswinkel (β) von mindestens 180° erstreckt.

8. Drehmomentübertragungsvorrichtung nach einem der Ansprüche 1 bis 4, **dadurch gekennzeichnet, dass** die Ausnehmungen (7) als Ausstanzungen oder Ausschnitte (7") ausgebildet sind, die die Befestigungselemente (5) bzw. Bohrungen (8) über einen Umfangsbereich (γ) bogenförmig umgeben.

## Claims

1. Torque transfer device (1) of a motor vehicle, which torque transfer device can transfer a torque from an internal combustion engine (2) to a torque converter (3), wherein the torque transfer device (1) comprises a disc-shaped or annular transfer part (4) which, in a first radial region (R₁), can be connected to the torque converter (3) by means of a number of fastening elements (5) situated at a first radius (r₁) and which, in a second radial region (R₂), can be connected to the internal combustion engine (2) by means of a number of fastening elements (6) situated at a second radius (r₂), wherein the transfer part (4) is provided, in the first radial region (R₁), with recesses (7) which are in the form of indentations (7') and which extend at least partially over the first radial region (R₁) and which reduce the axial rigidity of the transfer part (4), **characterized**
**in that** the recesses (7) extend from the radially inner edge of the transfer part (4) between two fastening elements (5) into the first radial region (R₁), and the number of indentations (7') corresponds to the number of fastening elements (5).

2. Torque transfer device according to Claim 1, **characterized in that** the fastening elements (5) are rivets which extend through bores (8) in the transfer part (4).

3. Torque transfer device according to Claim 2, **characterized in that** the first radial region (R₁) extends between 100% and 400% of the diameter (D) of the bores (8) in the transfer part (4).

4. Torque transfer device according to one of Claims 1 to 3, **characterized in that** a number of fastening elements (5) is arranged equidistantly around the circumference of the transfer part (4).

5. Torque transfer device according to Claim 1, **characterized in that** the indentations (7') extend at least as far as the radius (r₁) of the fastening elements (5).

6. Torque transfer device according to Claim 5, **characterized in that** the indentations (7') are formed such that an annular material region (10) remains around the bores (8) in the transfer part (4).

7. Torque transfer device according to Claim 6, **characterized in that** the annular material region (10) extends over a circumferential angle (β) of at least 180°.

8. Torque transfer device according to one of Claims 1 to 4, **characterized in that** the recesses (7) are in the form of punched-out portions or cutouts (7'') which surround the fastening elements (5) or bores (8) in an arcuate manner over a circumferential region (γ).

## Revendications

1. Dispositif de transfert de couple (1) d'un véhicule automobile, qui peut transférer un couple d'un moteur à combustion interne (2) à un convertisseur de couple (3), le dispositif de transfert de couple (1) comprenant une partie de transfert (4) en forme de disque ou de forme annulaire qui peut être connectée au convertisseur de couple (3) dans une première région de rayon (R₁) avec un certain nombre d'éléments de fixation (5) situés sur un premier rayon (r₁) et qui peut être connectée au moteur à combustion interne (2) dans une deuxième région de rayon (R₂) avec un certain nombre d'éléments de fixation (6) situés sur un deuxième rayon (r₂), la partie de transfert (4), dans la première région de rayon (r₁, étant pourvue d'évidements (7) qui sont réalisés sous forme d'entailles (7') et qui s'étendent au moins en partie sur la première région de rayon (r₁), et qui affaiblissent la rigidité axiale de la partie de transfert (4),
**caractérisé en ce que**
les évidements (7) s'étendent depuis le bord de la partie de transfert (4) situé radialement à l'intérieur entre deux éléments de fixation (5) dans la première région de rayon (R₁), et le nombre des entailles (7') correspond au nombre des éléments de fixation (5).

2. Dispositif de transfert de couple selon la revendication 1,
**caractérisé en ce que** les éléments de fixation (5) sont des rivets qui s'étendent à travers des alésages (8) dans la partie de transfert (4).

3. Dispositif de transfert de couple selon la revendication 2,
**caractérisé en ce que** la première région de rayon (R₁) s'étend dans la partie de transfert (4) sur entre 100% et 400% du diamètre (D) des alésages (8).

4. Dispositif de transfert de couple selon l'une quelconque des revendications 1 à 3,
**caractérisé en ce qu'**un certain nombre d'éléments de fixation (5) est disposé de manière équidistante autour de la périphérie de la partie de transfert (4).

5. Dispositif de transfert de couple selon la revendication 1,
**caractérisé en ce que** les entailles (7') s'étendent au moins jusqu'au rayon (r₁) des éléments de fixation (5).

6. Dispositif de transfert de couple selon la revendication 5,
**caractérisé en ce que** les entailles (7') sont réalisées de telle sorte qu'une région de matériau annulaire (10) subsiste autour des alésages (8) dans la partie de transfert (4).

7. Dispositif de transfert de couple selon la revendication 6,
**caractérisé en ce que** la région de matériau annulaire (10) s'étend sur un angle périphérique (β) d'au moins 180°.

8. Dispositif de transfert de couple selon l'une quelconque des revendications 1 à 4,
**caractérisé en ce que** les évidements (7) sont réalisés sous forme d'estampages ou de découpages (7") qui entourent en forme d'arc les éléments de fixation (5) ou les alésages (8) sur une région périphérique (γ).
